# EUROPEAN PATENT SPECIFICATION

(11) **EP 2 985 932 B1**
(45) Date of publication and mention of the grant of the patent: **21.02.2018**
(21) Application number: 13881480.1
(22) Date of filing: 12.04.2013
(51) Int. Cl.: H04B 10/50, H04J 14/02

(54) **MULTICARRIER-BASED OPTICAL TRANSMITTING SUBSYSTEM, AND METHOD FOR GENERATING OPTICAL SIGNAL**
MEHRTRÄGERBASIERTES OPTISCHES SENDESUBSYSTEM UND VERFAHREN ZUR ERZEUGUNG OPTISCHER SIGNALE
SOUS-SYSTÈME D'ÉMISSION OPTIQUE MULTI-PORTEUSES, ET PROCÉDÉ DE GÉNÉRATION D'UN SIGNAL OPTIQUE

(43) Date of publication of application: 17.02.2016
(73) Proprietor: Huawei Technologies Co., Ltd., Longgang District Shenzhen, Guangdong 518129 (CN)
(72) Inventor: SONG, Xiaolu, Shenzhen Guangdong 518129 (CN); ZENG, Li, Shenzhen Guangdong 518129 (CN)
(74) Representative: Isarpatent
(86) International application number: PCT/CN2013/074142
(87) International publication number: WO 2014/166108

(56) References cited:
- CN-A- 102 158 285
- CN-A- 102 171 951
- CN-A- 102 546 078
- CN-A- 102 882 631
- US-A1- 2009 067 843
- US-B2- 6 778 318
- CHRISTOPHER NITTA ET AL: "DCOF An Arbitration Free Directly Connected Optical Fabric", IEEE JOURNAL ON EMERGING AND SELECTED TOPICS IN CIRCUITS AND SYSTEMS, IEEE, PISCATAWAY, NJ, USA, vol. 2, no. 2, 1 June 2012 (2012-06-01), pages 169-182, XP011446371, ISSN: 2156-3357, DOI: 10.1109/JETCAS.2012.2193842
- LINJIE ZHOU ET AL: "Towards athermal optically-interconnected computing system using slotted silicon microring resonators and RF-photonic comb generation", APPLIED PHYSICS A; MATERIALS SCIENCE & PROCESSING, SPRINGER, BERLIN, DE, vol. 95, no. 4, 14 February 2009 (2009-02-14), pages 1101-1109, XP019710612, ISSN: 1432-0630
- DONG PO ET AL: "Low-power photonic components for optical interconnects", OPTOELECTRONIC INTERCONNECTS AND COMPONENT INTEGRATION XI, SPIE, 1000 20TH ST. BELLINGHAM WA 98225-6705 USA, vol. 7944, no. 1, 10 February 2011 (2011-02-10), pages 1-8, XP060020706, DOI: 10.1117/12.876425 [retrieved on 1901-01-01]

## Description

### TECHNICAL FIELD

The present invention relates to optical communications technologies, and in particular, to a multicarrier-based optical transmit subsystem and a method for generating an optical signal.

### BACKGROUND

With the development of the optical communications industry, technologies related to optical transceiver assemblies also continuously evolve, and an optical assembly that has a high speed, a low cost, and low power consumption and is miniaturized gradually attracts more attention in the industry.

On an optical transmit side, current 40GE, 100GE, and future 400GE optical transceiver assemblies on a client side mostly use a multichannel parallel implementation manner; therefore, multiplexing output by using a wavelength division multiplexing (Wavelength Division Multiplexing, WDM) light source in combination with an optical wavelength division multiplexer is necessary for an integrated optical transmit assembly.

There are multiple methods for generating a WDM light source, for example, a multichannel optical transmit device with different wavelengths, or a comb-shaped light source may be directly used as the WDM light source.

Based on design of a ring feedback cavity, a comb-shaped light source includes basic components such as a frequency shifter, a band-pass filter, an optical amplifier, and a coupler, and implements output of polychromatic light with a comb-shaped spectrum.

When a modulation signal is loaded by using polychromatic light with a comb-shaped spectrum, where the polychromatic light with a comb-shaped spectrum is output by a comb-shaped light source, light generated by the comb-shaped light source is first split by using a demultiplexer, to obtain multiple beams of single-frequency light (that is, to obtain different beams of monochromatic light) or multiple single-frequency optical carriers, then the modulation signal is loaded to each of the different beams of monochromatic light, to obtain multiple optical signals with different frequencies, and then the multiple optical signals with different frequencies are multiplexed and output by using a wavelength division multiplexer. This solution has an obvious advantage in an application scenario in which there are many channels. However, for a case in which a quantity of channels is small, such as 8 or 10, this solution has many disadvantages, for example, beams of light with a comb-shaped spectrum are simultaneously generated by using a feedback loop, and in a process in which the light with a comb-shaped spectrum is used as an optical carrier, the light needs to be split and modulated by using a demultiplexer and then multiplexed by using a wavelength division multiplexer, and therefore, an implementation process is complex.

CHRISTOPHER NITTA ET AL, "DCOF An Arbitration Free Directly Connected Optical Fabric", IEEE JOURNAL ON EMERGING AND SELECTED TOPICS IN CIRCUITS AND SYSTEMS, IEEE, PISCATAWAY, NJ, USA, vol. 2, no. 2, doi:10.1109/JETCAS.2012.2193842, ISSN 2156-3357, PAGE 169 - 182, discloses an optical modulator connected to an optical detector via a single waveguide. The optical modulator and the optical detector may comprise a plurality of microring resonators.

LINJIE ZHOU ET AL, "Towards athermal optically-interconnected computing system using slotted silicon microring resonators and RF-photonic comb generation", APPLIED PHYSICS A; MATERIALS SCIENCE & PROCESSING, SPRINGER, BERLIN, DE, vol. 95, no. 4, ISSN 1432-0630, PAGE 1101 - 1109, discloses a dual electrode Mach-Zehender modulator connected to a spectrum measurement via a single mode optical fibre (SMF-28).

DONG PO ET AL, "Low-power photonic components for optical interconnects", OPTOELECTRONIC INTERCONNECTS AND COMPONENT INTEGRATION XI, SPIE, 1000 20TH ST. BELLINGHAM WA 98225-6705 USA, (20110210), vol. 7944, no. 1, doi:10.1117/12.876425, PAGE 1 - 8, shows a microring modulator connected to a microring detector via a single link.

### SUMMARY

In view of this, embodiments of the present invention provide a multicarrier-based optical transmit subsystem and a method for generating an optical signal, so as to simplify a structure of the multicarrier-based optical transmit subsystem.

According to a first aspect, an embodiment of the present invention provides a multi-carrier-based optical transmit subsystem, including:
a comb-shaped light source apparatus, configured to generate and output polychromatic light;
a microring group, including multiple microring modulators, where each of the multiple microring modulators includes an input end and a download end, the input end of each of the multiple microring modulators is connected to the comb-shaped light source apparatus, and the multiple microring modulators each are configured to filter and modulate the polychromatic light, each microring modulator responds to one beam of monochromatic light or light with one frequency, and output the optical signals by using respective download ends of the multiple microring modulators; and
a plurality of public waveguides, connected to the download ends of the multiple microring modulators, and configured to multiplex the optical signals with different frequencies,
the plurality of microring modulators are grouped into multiple microring subgroups whose quantity is the same as that of the public waveguides, and the microring subgroups are connected to the public waveguides in a one-to-one correspondence manner,
the comb-shaped light source apparatus includes:
   one light source; and
   multiple shifting apparatuses, connected to the light source, and configured to perform frequency shifting on light emitted by the light source, to obtain polychromatic light,
wherein a quantity of the microring modulators in the microring group is equal to or greater than a quantity of the frequency shifting apparatuses, the frequency shifting apparatuses are connected in series by using a second waveguide, an output end of a frequency shifting apparatus that is farthest from the light source is connected to a third waveguide, and the third waveguide and each second waveguide each are connected to at least one microring modulator in the microring group.

With reference to the first aspect, in na possible implementation manner of the first aspect, the frequency shifting apparatus is a phase modulator to which a microwave signal is loaded, the same microwave signals are loaded to the phase modulators.

With reference to the first possible implementation manner of the first aspect, in a possible implementation manner of the first aspect, an optical amplifier is connected between any two adjacent frequency shifting apparatuses.

With reference to the first aspect or any one of the possible implementation manners of the first aspect, in a possible implementation manner of the first aspect, the system further includes:
a temperature control apparatus, configured to provide a stable temperature environment for the comb-shaped light source and the microring group.

According to a second aspect, an embodiment of the present invention provides a method for generating an optical signal, including:
generating and outputting polychromatic light by using one light source;
filtering and modulating the polychromatic light by using each of multiple microring modulators, each microring modulator responds to one beam of monochromatic light or light with one frequency; and
outputting multiple optical signals among the optical signals with different frequencies to a plurality of public waveguides,
the plurality of microring modulators are grouped into multiple microring subgroups whose quantity is the same as that of the public waveguides, and the microring subgroups are connected to the public waveguides in a one-to-one correspondence manner,
the generating and outputting polychromatic light by using one light source includes:
   performing stage-by-stage frequency shifting on the light source by using multiple cascading phase modulators to which a same microwave signal is loaded, to obtain multiple beams of polychromatic light,
   wherein a quantity of the microring modulators in a microring group is equal to or greater than a quantity of the frequency shifting apparatuses, the frequency shifting apparatuses are connected in series by using a second waveguide, an output end of a frequency shifting apparatus that is farthest from the light source is connected to a third waveguide, and the third waveguide and each second waveguide each are connected to at least one microring modulator in the microring group.

With reference to the second aspect, in a first possible implementation manner of the second aspect, the outputting multiple optical signals among the optical signals with different frequencies to the plurality of public waveguide further includes:
outputting optical signals among the optical signals with different frequencies except the multiple optical signals to at least one public waveguide.

With reference to the second aspect or the first possible implementation manner of the second aspect, in a second possible implementation manner of the second aspect, the method further includes:
providing a stable temperature environment for the light source and the microring modulator.

According to the multicarrier-based optical transmit subsystem and the method for generating an optical signal that are provided in the foregoing embodiments, optical signals with different frequencies are obtained by filtering and modulating polychromatic light by using a microring group, and are output to a public waveguide by using respective download ends of microring modulators. In this way, the polychromatic light can be split, and a modulation signal is loaded to optical carriers obtained by means of filtering, to obtain the optical signals with different frequencies; in addition, by connecting the download ends of the microring modulators in the microring group to the public waveguide, the optical signals with different frequencies that are obtained by means of modulation are multiplexed in the public waveguide, so that an extra demultiplexer and wavelength division multiplexer do not need to be disposed in a multicarrier-based optical transmit subsystem, and a structure of the multicarrier-based optical transmit subsystem is simplified, thereby reducing a cost of the multicarrier-based optical transmit subsystem.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of a multicarrier-based optical transmit subsystem according to an embodiment of the present invention;
FIG. 2 is a flowchart of a method for generating an optical signal according to another embodiment of the present invention;
FIG. 3 is a schematic structural diagram of a multicarrier-based optical transmit subsystem according to another embodiment of the present invention;
FIG. 4 is a schematic composition diagram of a waveguide of a microring modulator in a multicarrier-based optical transmit subsystem according to another embodiment of the present invention;
FIG. 5 is a schematic diagram of a connection between a microring modulator and a public waveguide in a multicarrier-based optical transmit subsystem according to another embodiment of the present invention; and
FIG. 6 is a schematic structural diagram of a multicarrier-based optical transmit subsystem according to another embodiment of the present invention.

### DESCRIPTION OF EMBODIMENTS

To make the objectives, technical solutions, and advantages of the present invention clearer, the following describes the present invention in further detail with reference to the accompanying drawings. Apparently, the described embodiments are merely some but not all of the embodiments of the present invention. All other embodiments obtained by persons of ordinary skill in the art based on the embodiments of the present invention without creative efforts shall fall within the protection scope of the present invention.

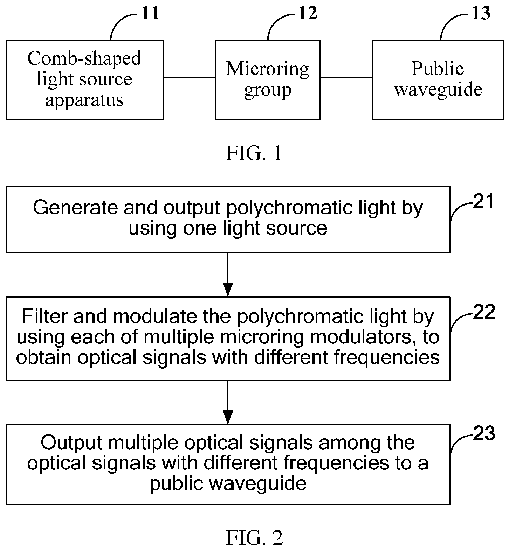

FIG. 1 is a schematic diagram of a multicarrier-based optical transmit subsystem according to an embodiment of the present invention. The system includes: a comb-shaped light source apparatus 11, a microring group 12, and a public waveguide 13.

The comb-shaped light source apparatus 11 is configured to generate and output polychromatic light, such as light with a comb-shaped spectrum.

The microring group 12 includes multiple microring modulators, where each of the multiple microring modulators includes an input end and a download end, the input end of each of the multiple microring modulators is connected to the comb-shaped light source apparatus, and the multiple microring modulators each are configured to filter and modulate the polychromatic light, to obtain optical signals with different frequencies, and output the optical signals by using respective download ends of the microring modulators.

For example, the microring group 12 includes five microring modulators, and each microring modulators responds to one beam of monochromatic light or light with one frequency. Assuming that the polychromatic light generated by the comb-shaped light source apparatus 11 includes light whose frequency is f1 (hereinafter referred to as light f1), light whose frequency is f2 (hereinafter referred to as light f2), light whose frequency is f3 (hereinafter referred to as light f3), light whose frequency is f4 (hereinafter referred to as light f4), and light whose frequency is f5 (hereinafter referred to as light f5), different microring modulators in the microring group 12 respectively respond to the five beams of monochromatic light. If the microring group 12 has a microring modulator W1, a microring modulator W2, a microring modulator W3, a microring modulator W4, and a microring modulator W5, the microring modulator W1 responds to the light f1, the microring modulator W2 responds to the light f2, the microring modulator W3 responds to the light f3, the microring modulator W4 responds to the light f4, and the microring modulator W5 responds to the light f5. Responding to light with one frequency means filtering out light with all other frequencies in a free spectral range except the light, and using the light with the frequency to which a microring modulator responds as an optical carrier, to load a modulation signal, that is, to perform modulation to obtain an optical signal with the frequency. For example, the microring modulator W1 responds to the light f1, that is, filters out light with other frequencies in a free spectral range except the light f1 and loads a modulation signal by using the light f1, to obtain an optical signal whose frequency is f1. Similarly, the microring modulator W2 outputs an optical signal whose frequency is f2, the microring modulator W3 outputs an optical signal whose frequency is f3, the microring modulator W4 outputs an optical signal whose frequency is f4, and the microring modulator W5 outputs an optical signal whose frequency is f5. The microring modulators each output the optical signal by using respective download ends of the microring modulators. Multiple microring modulators each respond to light with one frequency, so that the polychromatic light can be split, and a modulation signal can be loaded to optical carriers obtained by means of filtering, to obtain optical signals; in this way, using of a demultiplexer is avoided, and a structure of the multicarrier-based optical transmit subsystem is simplified, thereby reducing a cost of the multicarrier-based optical transmit subsystem and making generating of an optical signal more convenient and efficient.

The public waveguide 13 is connected to the download ends of the multiple microring modulators, and is configured to multiplex all or some optical signals among the optical signals with different frequencies. For example, a download end of each of the microring modulator W1, the microring modulator W2, the microring modulator W3, the microring modulator W4, and the microring modulator W5 is connected to the public waveguide 13, and optical signals with at least five frequencies of f1, f2, f3, f4, and f5 are mixed together in the public waveguide 13, that is, multiplexing is implemented; in this way, using of a wavelength division multiplexer is avoided, and the structure of the multicarrier-based optical transmit subsystem is further simplified, thereby reducing a cost of the multicarrier-based optical transmit subsystem and making generating of an optical signal more convenient and efficient.

Further, there may be one or more public waveguides 13, that is, the multicarrier-based optical transmit subsystem may have one or multiple channels of output and a signal of each channel is output by using a public waveguide.

For example, when there is one public waveguide 13, each of the download ends of all the microring modulators in the microring group 12 is connected to the public waveguide 13.

When there are multiple public waveguides 13, all the microring modulators in the microring group 12 are grouped into multiple microring subgroups whose quantity is the same as that of the public waveguides 13, and the microring subgroups are connected to the public waveguides 13 in a one-to-one correspondence manner. The microring modulator W1, the microring modulator W2, the microring modulator W3, the microring modulator W4, and the microring modulator W5 are still used as an example. Assuming that there are two public waveguides 13, the microring modulator W1, the microring modulator W2, the microring modulator W3, the microring modulator W4, and the microring modulator W5 are grouped into two microring subgroups G1 and G2, where the microring subgroup G1 includes the microring modulator W1 and the microring modulator W2, and the microring subgroup G2 includes the microring modulator W3, the microring modulator W4, and the microring modulator W5. Each of the download ends of the microring modulator W1 and the microring modulator W2 in the microring subgroup G1 is connected to one of the public waveguides 13, to implement multiplexing of the optical signals whose frequencies are f1 and f2. Each of the download ends of the microring modulator W3, the microring modulator W4, and the microring modulator W5 in the microring subgroup G2 is connected to the other public waveguide 13, to implement multiplexing of the optical signals whose frequencies are f3, f4, and f5.

Further, the comb-shaped light source apparatus may include one light source and at least one frequency shifting apparatus, where the at least one frequency shifting apparatus is connected to the light source, and is configured to perform frequency shifting on light emitted by the light source, to obtain polychromatic light, so that the multicarrier-based optical transmit subsystem can generate the polychromatic light without a feedback loop, and the structure of the multicarrier-based optical transmit subsystem is further simplified, thereby reducing a cost of the multicarrier-based optical transmit subsystem and making generating of an optical signal more convenient and efficient.

For example, when there is one frequency shifting apparatus, each of the microring modulators in the microring group 12 is connected to a first waveguide, and the first waveguide is connected to an output end of the frequency shifting apparatus.

When there are multiple frequency shifting apparatuses, a quantity of the microring modulators in the microring group 12 is equal to or greater than a quantity of the frequency shifting apparatuses, the frequency shifting apparatuses are connected in series by using a second waveguide, an output end of a frequency shifting apparatus that is farthest from the light source is connected to a third waveguide, and the third waveguide and each second waveguide each are connected to at least one microring modulator in the microring group 12. In this way, for an optical transmit subsystem in which there are many channels or many carriers, by using multiple phase modulators, polychromatic light meeting a requirement can still be provided for more microring modulators to use.

The frequency shifting apparatus may be a frequency shifter or may be a phase modulator. When the frequency shifting apparatus is a phase modulator, a microwave signal is loaded to the phase modulator, and when there are multiple frequency shifting apparatuses, the same microwave signals are loaded to the phase modulators.

Further, when there are multiple frequency shifting apparatuses, an optical amplifier may be connected between any two adjacent frequency shifting apparatuses, so as to ensure that the polychromatic light has enough energy to be transmitted backwards.

Further, the multicarrier-based optical transmit subsystem provided in this embodiment of the present invention may further include:
a temperature control apparatus, configured to provide a stable temperature environment for the comb-shaped light source apparatus and the microring group. For example, a public temperature control system may be used for the light source and the microring group, to implement relative locking of a wavelength, so as to ensure that frequencies of the polychromatic light and light to which the microring modulator responds are relatively stable.

According to the multicarrier-based optical transmit subsystem provided in the foregoing embodiment, optical signals with different frequencies are obtained by filtering and modulating polychromatic light by using a microring group, and are output to a public waveguide by using respective download ends of microring modulators. In this way, the polychromatic light can be split, and a modulation signal is loaded to optical carriers obtained by means of filtering, to obtain the optical signals with different frequencies; in addition, by connecting the download ends of the microring modulators in the microring group to the public waveguide, the optical signals that with different frequencies that are obtained by means of modulation are multiplexed in the public waveguide, so that an extra demultiplexer and wavelength division multiplexer do not need to be disposed in a multicarrier-based optical transmit subsystem, and a structure of the multicarrier-based optical transmit subsystem is simplified, thereby reducing a cost of the multicarrier-based optical transmit subsystem.

For an optical interconnection scenario in which there are few channels, by using the technical solution provided in the foregoing embodiment, frequency shifting may be performed on a seed light source stage by stage, to generate a light source with multiple wavelengths; then a single-wavelength light source is obtained by means of filtering by a filter, and a modulation signal is loaded; and then for multiple channels on which the signals are loaded, wavelength division multiplexing is performed on the signals that are loaded on the multiple channels, and the signals that are loaded on the multiple channels and on which the wavelength division multiplexing has been performed are output. In this way, an inner structure of a multi-carrier optical transmit assembly is greatly simplified, and an application manner is more flexible.

FIG. 2 is a flowchart of a method for generating an optical signal according to another embodiment of the present invention. The method shown in this embodiment can be implemented by using the system shown in FIG. 1, and includes:
Step 21: Generate and output polychromatic light by using one light source, for example, generate and output light with a comb-shaped spectrum.
Step 22: Filter and modulate the polychromatic light by using each of multiple microring modulators, to obtain optical signals with different frequencies. For example, the multiple microring modulators each respond to light with one frequency, so that the polychromatic light can be split, and a modulation signal can be loaded to optical carriers obtained by means of filtering, to obtain optical signals; in this way, using of a demultiplexer is avoided, and a structure of a multicarrier-based optical transmit subsystem is simplified, thereby reducing a cost of the multicarrier-based optical transmit subsystem and making generating of an optical signal more convenient and efficient.
Step 23: Output multiple optical signals among the optical signals with different frequencies to a public waveguide. For example, all or some of the optical signals generated in step 22 are output to a public waveguide, and these optical signals are mixed in the public waveguide, to implement multiplexing; in this way, using of a wavelength division multiplexer is avoided, and the structure of the multicarrier-based optical transmit subsystem is further simplified, thereby reducing a cost of the multicarrier-based optical transmit subsystem and making generating of an optical signal more convenient and efficient.

Further, the generating and outputting polychromatic light by using one light source may include:
performing frequency shifting on the light source by using one phase modulator to which a microwave signal is loaded, to obtain and output polychromatic light, so that the multicarrier-based optical transmit subsystem can generate the polychromatic light without a feedback loop, and the structure of the multicarrier-based optical transmit subsystem is further simplified, thereby reducing a cost of the multicarrier-based optical transmit subsystem and making generating of an optical signal more convenient and efficient.

Alternatively, the generating and outputting polychromatic light by using one light source may include:
performing stage-by-stage frequency shifting on the light source by using multiple cascading phase modulators to which a same microwave signal is loaded, to obtain multiple beams of polychromatic light. In this way, for an optical transmit subsystem in which there are many channels or many carriers, by using multiple phase modulators, polychromatic light meeting a requirement can still be provided for more microring modulators to use.

Further, the outputting multiple optical signals among the optical signals with different frequencies to a public waveguide may further include:
outputting optical signals among the optical signals with different frequencies except the multiple optical signals to at least one public waveguide. For example, when the multicarrier-based optical transmit subsystem has multiple channels of output, that is, there are multiple public waveguides, the multiple microring modulators each may output an optical signal to a public waveguide, and for details, reference may be made to the descriptions in the foregoing system embodiment.

Further, the method for generating an optical signal provided in this embodiment of the present invention may further include:
providing a stable temperature environment for the light source and the microring modulator, so as to ensure that frequencies of the polychromatic light and light to which the microring modulator responds are relatively stable.

According to the method for generating an optical signal provided in the foregoing embodiment, optical signals with different frequencies are obtained by filtering and modulating polychromatic light by using multiple modulators, and are output to a public waveguide by using respective download ends of the microring modulators. In this way, the polychromatic light can be split, and a modulation signal is loaded to optical carriers obtained by means of filtering, to obtain the optical signals with different frequencies; in addition, by connecting the download ends of the microring modulators in the microring group to the public waveguide, the optical signals with different frequencies that are obtained by means of modulation are multiplexed in the public waveguide, so that an extra demultiplexer and wavelength division multiplexer do not need to be disposed in a multicarrier-based optical transmit subsystem, and a structure of the multicarrier-based optical transmit subsystem is simplified, thereby reducing a cost of the multicarrier-based optical transmit subsystem.

For an optical interconnection scenario in which there are few channels, according to the technical solution provided by the foregoing embodiment, frequency shifting may be performed on a seed light source stage by stage, to generate light source of multiple wavelengths, then a single-wavelength light source is obtained through filtering by a filter and a modulation signal is loaded, and then for multiple channels on which the signals are loaded, wavelength division multiplexing is performed on the signals that are loaded on the multiple channels, and the signals that are loaded on the multiple channels and on which the wavelength division multiplexing has been performed are output. In this way, an inner structure of a multi-carrier optical transmit assembly is greatly simplified, and an application manner is more flexible.

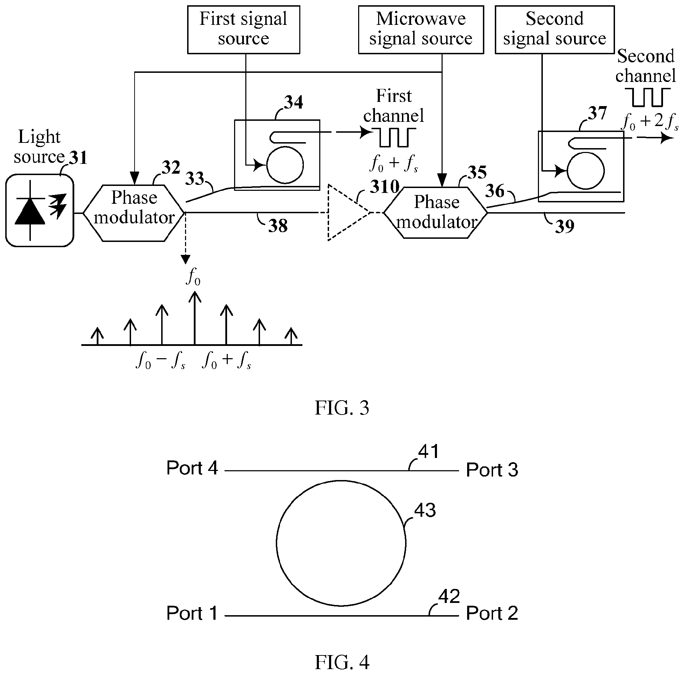

FIG. 3 is a schematic structural diagram of a multicarrier-based optical transmit subsystem according to another embodiment of the present invention. This embodiment is similar to the embodiment shown in FIG. 1, and a difference lies in that a comb-shaped light source apparatus in this embodiment includes one light source and multiple frequency shifting apparatuses, the frequency shifting apparatuses are phase modulators, and a same microwave signal is loaded to each phase modulator.

FIG. 3 shows two phase modulators and two microring modulators. The two phase modulators are cascaded, a same microwave signal is loaded to the two phase modulators, and each phase modulator is connected to one microring modulator.

A light source 31 generates an optical signal whose central frequency is f₀. After the optical signal is injected into a first phase modulator 32, an external microwave signal source loads a signal Vₘsin(2πfₛt) and a signal Vₘcos(2πfₛt) to two arms of the first phase modulator 32 respectively. By adjusting a working point of the first phase modulator 32, polychromatic light whose frequency is f₁=f₀±nfₛ (n = 1, 2, 3...) is generated, that is, a frequency shifting phenomenon is generated. As shown in FIG. 3, as n increases, an amplitude of light with a corresponding frequency gradually decreases, and a relative amplitude between f₀ and f₁=f₀±nfₛ is also limited by the working point of the phase modulator.

A process of generating an optical signal on a first channel is used as an example. The polychromatic light obtained after frequency shifting is transmitted along a waveguide 38 (that is, the second waveguide in the embodiment shown in FIG. 1), and enters a straight waveguide of a first microring modulator 34 after being coupled by a coupling waveguide 33, and then is coupled and enters a ring waveguide. Because a microring modulator has a filtering feature and responds to only a frequency in a specific range (for example, the first microring modulator 34 responds to only light whose frequency is f₁=f₀+fₛ in a comb-shaped spectrum), the microring modulator 34 has both a filtering function and a modulation function, that is, loads a to-be-transmitted signal to light whose frequency is f₁=f₀+fₛ and to which the microring modulator 34 responds or light whose frequency is f₁=f₀+fₛ and that is obtained by means of filtering, to obtain an optical signal with a specific frequency. The to-be-transmitted signal is from a first signal source. The optical signal with the specific frequency is output from a download end of the microring modulator 34 (that is, the first channel outputs a modulation optical signal whose frequency is f₁=f₀+fₛ).

By analogy, the polychromatic light with a comb-shaped spectrum after frequency shifting that is output by the first phase modulator 32 enters a second phase modulator 35. Because a same microwave signal from a same microwave signal source is loaded to the second phase modulator 35 and the first phase modulator 32, a generated frequency shifting effect is similar. By controlling a working point of a second microring modulator 37, an amplitude of light whose frequency is f₂=f₀±2fₛ increases. After the output polychromatic light with the comb-shaped spectrum passes through the second microring modulator 37, the light whose frequency is f₂=f₀+2fₛ is obtained by means of filtering, and a signal generated by a second signal source is loaded to the light whose frequency is f₂=f₀+2fₛ, to obtain an optical signal whose frequency is f₂=f₀+2fₛ. The optical signal whose frequency is f₂=f₀+2fₛ is output from a second channel. The second microring modulator 37 is connected to a waveguide 39 (that is, the third waveguide in the embodiment shown in FIG. 1), and polychromatic light output by the second phase modulator 35 is obtained by using a coupling waveguide 36.

According to a requirement imposed by an actual application scenario on a quantity of WDM channels, a third-stage channel, a fourth-stage channel, and even more channels may be further configured. Accordingly, a third phase modulator, a fourth phase modulator, a third microring modulator, a fourth microring modulator, and even more microring modulators may be further configured. A quantity of phase modulators may be equal to or less than a quantity of channels, a quantity of microring modulators is equal to a quantity of channels, and a connection manner is similar to that shown in FIG. 3. When the quantity of phase modulators is less than the quantity of channels, a waveguide to which an output end of one phase modulator is connected may be connected to two or more microring modulators.

An optical amplifier 310 is a candidate device, and is connected between two phase modulators. After being coupled by multiple coupling waveguides, optical power of polychromatic light transmitted on a waveguide has a certain degree of loss, and the optical amplifier 310 may be configured to increase optical power of the polychromatic light with the comb-shaped spectrum.

Composition of waveguides of microring modulators such as the microring modulator 34 and the microring modulator 37 may be shown in FIG. 4, and the composition of waveguides of microring modulators includes a straight waveguide 41, a straight waveguide 42, and a ring waveguide 43. One end of the straight waveguide 41 is an input end (that is, a port 1), and the other end is a straight-through end (that is, a port 2). One end of the straight waveguide 42 is an upload end (that is, a port 3), and the other end is a download end (that is, a port 4).

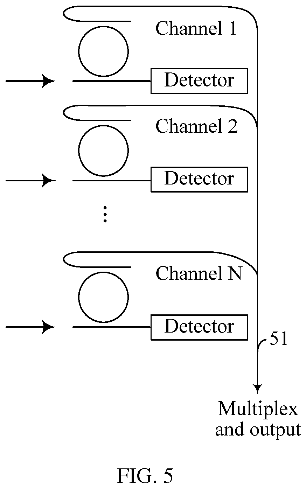

After obtaining an optical signal by means of modulation, each microring modulator outputs the optical signal obtained by means of modulation to a channel by using a download end. Optical signals on channels are multiplexed and output by using a public waveguide. As shown in FIG. 5, a download end of a first microring modulator is connected to a public waveguide 51 by using a channel 1, and a download end of a second microring modulator is connected to the public waveguide 51 by using a channel 2. By analogy, a download end of an N^{th} microring modulator is connected to the public waveguide 51 by using a channel N. In this way, optical signals with different frequencies are multiplexed and output by using the public waveguide 51 without a need for introducing an extra optical wavelength division multiplexer, and a structure of a multicarrier-based optical transmit subsystem is simplified, thereby reducing a cost.

In addition, referring to FIG. 5, a straight-through end of a microring modulator may be used as a port for optoelectronic monitoring, that is, an optoelectronic detector for monitoring the outside, to monitor, in real time, a parameter of an optical signal passing through the microring modulator.

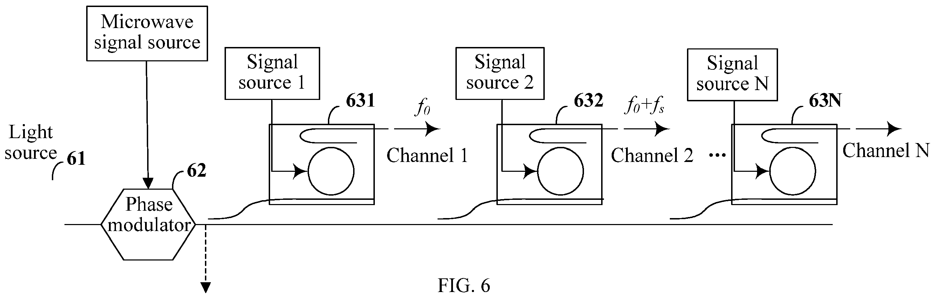

FIG. 6 is a schematic structural diagram of a multicarrier-based optical transmit subsystem according to another embodiment of the present invention. This embodiment is similar to the embodiment shown in FIG. 3, and relative strength between a central frequency and a side lobe can be controlled by adjusting a working point of a phase modulator. A difference lies in that there is one frequency shifting apparatus in this embodiment, which is applicable to an application scenario in which there are fewer channels.

In FIG. 6, after frequency shifting is performed by a phase modulator 62, a light source 61 generates polychromatic light with a comb-shaped spectrum, that is, polychromatic light whose frequency is f₁=f₀±nfₛ (n = 1, 2, 3...).

A microring group includes N microring modulators: a microring modulator 631, a microring modulator 632, ..., and a microring modulator 63N, each of which filters and modulates the polychromatic light with the comb-shaped spectrum, to load N different modulation signals to light with different frequencies in the polychromatic light and then output the light to a public waveguide through N channels: a channel 1, a channel 2, ..., and a channel N (for details, refer to FIG. 5), so as to implement multiplexing output. The N different modulation signals are from N signal sources: a signal source 1, a signal source 2, ..., and a signal source N.

Further, light in the microring modulators may also be monitored, and a monitoring manner is the same as that in the descriptions in the embodiment shown in FIG. 3, which is not described again.

According to the foregoing embodiment of the present invention, by loading, to two arms of a phase modulator, a dot-frequency signal provided by a microwave signal source, frequency shifting of a light source is implemented, so as to generate multi-carrier output, that is, polychromatic light with a comb-shaped spectrum; then microring modulators filter and modulate the polychromatic light obtained by mean of frequency shifting, to obtain optical signals with different frequencies; and by using features of the microring modulators, a download end of each of the microring modulators is connected to a public waveguide, to multiplex the optical signals with different frequencies. In this way, an objective of implementing multiplexing output of multichannel modulation optical signals without a device such as a demultiplexer or a wavelength division multiplexer is achieved, and a structure of a multicarrier-based optical transmit subsystem is simplified, thereby reducing a cost of the multicarrier-based optical transmit subsystem and improving efficiency of generating an optical signal.

The foregoing embodiment is applicable to a WDM optical transmit scenario in which there are few channels. Because microring modulators used for filtering and modulating are introduced, and download ends of the microring modulators are connected to a public waveguide to implement multiplexing, the multicarrier-based optical transmit subsystem provided in the embodiment of the present invention has advantages of a simple and compact structure, easy integration, and the like. In addition, by using one light source and by loading a dot-frequency signal to a phase modulator, frequency shifting of the light source is implemented, to generate light with multiple frequencies, the light with multiple frequencies is split based on filtering features of the microring modulators, a modulation signal is loaded to monochromatic light obtained by means of splitting by the microring modulators, to obtain optical signals with different frequencies, and the optical signals obtained by means of modulation are multiplexed and output by using the download ends of the microring modulators and the public waveguide; and compared with a multi-light-source system, the optical signal transmit subsystem provided in the embodiment of the present invention has advantages of a simpler structure and a more flexible configuration in an application scenario in which a quantity of channels is changeable.

Finally, it should be noted that the foregoing embodiments are merely intended for describing the technical solutions of the present invention, but are not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof; however, these modifications or replacements do not make the essence of corresponding technical solutions depart from the scope of the technical solutions in the embodiments of the present invention.

## Claims

1. A multicarrier-based optical transmit subsystem, comprising:
a comb-shaped light source apparatus (11), configured to generate and output polychromatic light;
a microring group (12), comprising multiple microring modulators, wherein each of the multiple microring modulators comprises an input end and a download end, the input end of each of the multiple microring modulators is connected to the comb-shaped light source apparatus (11), and the multiple microring modulators each are configured to filter and modulate the polychromatic light, each microring modulator responds to one beam of monochromatic light or light with one frequency, and output the optical signals by using respective download ends of the multiple microring modulators; and
a plurality of public waveguides (13), connected to the download ends of the multiple microring modulators, and configured to multiplex the optical signals with different frequencies,
the plurality of microring modulators are grouped into multiple microring subgroups whose quantity is the same as that of the public waveguides, and the microring subgroups are connected to the public waveguides in a one-to-one correspondence manner,
wherein the comb-shaped light source apparatus (11) comprises:
one monochromatic light source; and
multiple frequency shifting apparatuses, connected to the light source, and configured to perform frequency shifting on light emitted by the light source, to obtain polychromatic light;
wherein the quantity of the microring modulators in the microring group (12) is equal to or greater than a quantity of the frequency shifting apparatuses, the frequency shifting apparatuses are connected in series by using a waveguide, and the output of each one of the frequency shifting apparatuses is connected to at least one microring modulator in the microring group.

2. The system according to claim 1, wherein the frequency shifting apparatus is a phase modulator to which a microwave signal is loaded, the same microwave signals are loaded to the phase modulators.

3. The system according to claim 1, wherein an optical amplifier is connected between any two adjacent frequency shifting apparatuses.

4. The system according to any one of claims 1 to 3, further comprising:
a temperature control apparatus, configured to provide a stable temperature environment for the comb-shaped light source (11) and the microring group (12).

5. A method for generating an optical signal, comprising:
generating and outputting (21) polychromatic light by using one monochromatic light source;
filtering and modulating (22) the polychromatic light by using each of multiple microring modulators, each microring modulator responds to one beam of monochromatic light or light with one frequency; and
outputting (23) multiple optical signals among the optical signals with different frequencies to a plurality of public waveguides,
the plurality of microring modulators are grouped into multiple microring subgroups whose quantity is the same as that of the public waveguides, and the microring subgroups are connected to the public waveguides in a one-to-one correspondence manner,
wherein the generating and outputting (21) polychromatic light by using one monochromatic light source comprises:
performing stage-by-stage frequency shifting on the light generated by the monochromatic light source by using multiple cascading phase modulators to which a same microwave signal is loaded, to obtain multiple beams of polychromatic light,
wherein a quantity of the microring modulators in a microring group is equal to or greater than a quantity of the frequency shifting apparatuses, the frequency shifting apparatuses are connected in series by using a waveguide, and the output of each one of the frequency shifting apparatuses is connected to at least one microring modulator in the microring group.

6. The method according to claim 5, wherein the outputting (23) multiple optical signals among the optical signals with different frequencies to the plurality of public waveguides further comprises:
outputting optical signals among the optical signals with different frequencies except the multiple optical signals to at least one public waveguide.

7. The method according to claim 5 or 6, further comprising:
providing a stable temperature environment for the light source and the microring modulator.

## Patentansprüche

1. Optisches Übertragungsuntersystem auf Mehrfachträgerbasis, das Folgendes umfasst:
eine kammförmige Lichtquellenvorrichtung (11), die konfiguriert ist, polychromatisches Licht zu erzeugen und auszugeben;
eine Mikroringgruppe (12), die mehrere Mikroringmodulatoren enthält, wobei jeder der mehreren Mikroringmodulatoren ein Eingangsende und ein Herunterladeende aufweist, wobei das Eingangsende jedes der mehreren Mikroringmodulatoren mit der kammförmigen Lichtquellenvorrichtung (11) verbunden ist und wobei die mehreren Mikroringmodulatoren jeweils konfiguriert sind, das polychromatische Licht zu filtern und zu modulieren, wobei jeder Mikroringmodulator auf ein Strahlenbündel von monochromatischem Licht oder von Licht mit einer Frequenz antwortet, und die optischen Signale unter Verwendung jeweiliger Herunterladeenden der mehreren Mikroringmodulatoren auszugeben; und
mehrere öffentliche Wellenleiter (13), die mit den Herunterladeenden der mehreren Mikroringmodulatoren verbunden sind und konfiguriert sind, die optischen Signale mit unterschiedlichen Frequenzen zu multiplexieren,
wobei die mehreren Mikroringmodulatoren in mehrere Mikroringuntergruppen gruppiert sind, deren Menge gleich jener der öffentlichen Wellenleiter ist, und wobei die Mikroringuntergruppen mit den öffentlichen Wellenleitern in einer 1-zu-1-Entsprechung verbunden sind,
wobei die kammförmige Lichtquellenvorrichtung (11) Folgendes umfasst:
eine monochromatische Lichtquelle; und
mehrere Frequenzverschiebungsvorrichtungen, die mit der Lichtquelle verbunden sind und konfiguriert sind, eine Frequenzverschiebung an Licht, das von der Lichtquelle ausgesendet wird, auszuführen, um polychromatisches Licht zu erhalten;
wobei die Menge der Mikroringmodulatoren in der Mikroringgruppe (12) gleich oder größer als eine Menge der Frequenzverschiebungsvorrichtungen ist, wobei die Frequenzverschiebungsvorrichtungen unter Verwendung eines Wellenleiters in Reihe geschaltet sind und der Ausgang jeder der Frequenzverschiebungsvorrichtungen mit wenigstens einem Mikroringmodulator in der Mikroringgruppe verbunden ist.

2. System nach Anspruch 1, wobei die Frequenzverschiebungsvorrichtung ein Phasenmodulator ist, in den ein Mikrowellensignal geladen wird, wobei in die Phasenmodulatoren die gleichen Mikrowellensignale geladen werden.

3. System nach Anspruch 1, wobei zwischen jeweils zwei benachbarte Frequenzverschiebungsvorrichtungen ein optischer Verstärker geschaltet ist.

4. System nach einem der Ansprüche 1 bis 3, das ferner Folgendes umfasst:
eine Temperatursteuervorrichtung, die konfiguriert ist, für die kammförmige Lichtquelle (11) und die Mikroringgruppe (12) eine stabile Temperaturumgebung bereitzustellen.

5. Verfahren zum Erzeugen eines optischen Signals, das Folgendes umfasst:
Erzeugen und Ausgeben (21) von polychromatischem Licht unter Verwendung einer monochromatischen Lichtquelle;
Filtern und Modulieren (22) des polychromatischen Lichts unter Verwendung jedes von mehreren Mikroringmodulatoren, wobei jeder Mikroringmodulator auf ein Strahlenbündel von monochromatischem Licht oder von Licht mit einer Frequenz antwortet; und
Ausgeben (23) mehrerer optischer Signale unter den optischen Signalen mit unterschiedlichen Frequenzen an mehrere öffentliche Wellenleiter,
wobei die mehreren Mikroringmodulatoren in mehrere Mikroringuntergruppen gruppiert sind, deren Menge gleich jener der öffentlichen Wellenleiter ist, und wobei die Mikroringuntergruppen mit den öffentlichen Wellenleitern in einer 1-zu-1-Entsprechung verbunden sind,
wobei das Erzeugen und Ausgeben (21) von polychromatischem Licht unter Verwendung einer monochromatischen Lichtquelle Folgendes umfasst:
Ausführen einer stufenweisen Frequenzverschiebung an dem Licht, das durch die monochromatische Lichtquelle erzeugt wird, unter Verwendung mehrerer in Kaskade geschalteter Phasenmodulatoren, in die dasselbe Mikrowellensignal geladen wird, um mehrere Strahlenbündel von polychromatischem Licht zu erhalten,
wobei eine Menge der Mikroringmodulatoren in einer Mikroringgruppe gleich oder größer als eine Menge der Frequenzverschiebungsvorrichtungen ist, wobei die Frequenzverschiebungsvorrichtungen unter Verwendung eines Wellenleiters in Reihe geschaltet sind und wobei der Ausgang jeder der Frequenzverschiebungsvorrichtungen mit wenigstens einem Mikroringmodulator in der Mikroringgruppe verbunden ist.

6. Verfahren nach Anspruch 5, wobei das Ausgeben (23) mehrerer optischer Signale unter den optischen Signalen mit unterschiedlichen Frequenzen an die mehreren öffentlichen Wellenleiter ferner Folgendes umfasst:
Ausgeben von optischen Signalen unter den optischen Signalen mit unterschiedlichen Frequenzen mit Ausnahme der mehreren optischen Signale an wenigstens einen öffentlichen Wellenleiter.

7. Verfahren nach Anspruch 5 oder 6, das ferner Folgendes umfasst:
Bereitstellen einer stabilen Temperaturumgebung für die Lichtquelle und den Mikroringmodulator.

## Revendications

1. Sous-système de transmission optique multiporteuse, comprenant :
un appareil source de lumière en forme de peigne (11), configuré pour générer et délivrer de la lumière polychromatique ;
un groupe de micro-anneaux (12), comprenant de multiples modulateurs en micro-anneau, chacun des multiples modulateurs en micro-anneau comprenant une extrémité d'entrée et une extrémité de téléchargement, l'extrémité d'entrée de chacun des multiples modulateurs en micro-anneau étant reliée à l'appareil source de lumière en forme de peigne (11), et les multiples modulateurs en micro-anneau étant chacun configurés pour filtrer et moduler la lumière polychromatique, chaque modulateur en micro-anneau répondant à un faisceau de lumière monochromatique ou de lumière avec une fréquence, et délivrant les signaux optiques en utilisant des extrémités de téléchargement respectives des multiples modulateurs en micro-anneau ; et
une pluralité de guides d'ondes publics (13), reliés aux extrémités de téléchargement des multiples modulateurs en micro-anneau, et configurés pour multiplexer les signaux optiques avec différentes fréquences,
la pluralité de modulateurs en micro-anneau étant regroupés en de multiples sous-groupes de micro-anneaux dont la quantité est la même que celle des guides d'ondes publics, et les sous-groupes de micro-anneaux étant reliés aux guides d'ondes publics à la manière d'une correspondance biunivoque,
l'appareil source de lumière en forme de peigne (11) comprenant :
une source de lumière monochromatique ; et
de multiples appareils de déplacement de fréquence, reliés à la source de lumière, et configurés pour effectuer un déplacement de fréquence sur la lumière émise par la source de lumière, pour obtenir de la lumière polychromatique ;
la quantité des modulateurs en micro-anneau dans le groupe de micro-anneaux (12) étant égale ou supérieure à une quantité des appareils de déplacement de fréquence, les appareils de déplacement de fréquence étant branchés en série au moyen d'un guide d'ondes, et la sortie de chacun des appareils de déplacement de fréquence étant reliée à au moins un modulateur en micro-anneau dans le groupe de micro-anneaux.

2. Système selon la revendication 1, dans lequel l'appareil de déplacement de fréquence est un modulateur de phase auquel un signal micro-ondes est envoyé, les mêmes signaux micro-ondes sont envoyés aux modulateurs de phase.

3. Système selon la revendication 1, dans lequel un amplificateur optique est branché entre deux quelconques appareils de déplacement de fréquence adjacents.

4. Système selon l'une quelconque des revendications 1 à 3, comprenant en outre :
un appareil de régulation de température, configuré pour fournir un environnement de température stable pour la source de lumière en forme de peigne (11) et le groupe de micro-anneaux (12).

5. Procédé destiné à générer un signal optique, comprenant les étapes suivantes :
générer et délivrer (21) de la lumière polychromatique en utilisant une source de lumière monochromatique ;
filtrer et moduler (22) la lumière polychromatique en utilisant chacun de multiples modulateurs en micro-anneau, chaque modulateur en micro-anneau répondant à un faisceau de lumière monochromatique ou de lumière avec une fréquence ; et
délivrer (23) de multiples signaux optiques parmi les signaux optiques avec différentes fréquences à une pluralité de guides d'ondes publics,
la pluralité de modulateurs en micro-anneau sont regroupés en de multiples sous-groupes de micro-anneaux dont la quantité est la même que celle des guides d'ondes publics, et les sous-groupes de micro-anneaux sont reliés aux guides d'ondes publics à la manière d'une correspondance biunivoque,
l'étape consistant à générer et délivrer (21) de la lumière polychromatique en utilisant une source de lumière monochromatique comprenant l'opération suivante :
effectuer un déplacement de fréquence étage par étage sur la lumière générée par la source de lumière monochromatique en utilisant de multiples modulateurs de phase en cascade auxquels un même signal micro-ondes est envoyé, pour obtenir de multiples faisceaux de lumière polychromatique,
une quantité des modulateurs en micro-anneau dans un groupe de micro-anneaux étant égale ou supérieure à une quantité des appareils de déplacement de fréquence, les appareils de déplacement de fréquence étant branchés en série au moyen d'un guide d'ondes, et la sortie de chacun des appareils de déplacement de fréquence étant reliée à au moins un modulateur en micro-anneau dans le groupe de micro-anneaux.

6. Procédé selon la revendication 5, dans lequel l'étape consistant à délivrer (23) de multiples signaux optiques parmi les signaux optiques avec différentes fréquences à la pluralité de guides d'ondes publics comprend en outre l'opération suivante :
délivrer des signaux optiques parmi les signaux optiques avec différentes fréquences excepté les multiples signaux optiques à au moins un guide d'ondes public.

7. Procédé selon la revendication 5 ou 6, comprenant en outre l'étape suivante :
fournir un environnement de température stable pour la source de lumière et le modulateur en micro-anneau.
